# EUROPEAN PATENT APPLICATION

(11) **EP 1 641 061 A1**
(43) Date of publication of application: **29.03.2006**
(21) Application number: 04746973.9
(22) Date of filing: 29.06.2004
(51) Int. Cl.: H01M 4/02, H01M 4/04, H01M 4/62

(54) **COMPOUNDING AGENT COMPOSITION FOR CATHODE FILM, POLYETHER POLYMER COMPOSITION FOR CATHODE FILM**

(30) Priority: 30.06.2003 JP 2003187440
(71) Applicant: ZEON CORPORATION, Tokyo 100-8323 (JP)
(72) Inventor: NISHIMURA, Koichi ZEON CORPORATION, Tokyo 100-8323 (JP); YONEMARU, Hiroyuki ZEON CORPORATION, Tokyo 100-8323 (JP)
(74) Representative: Albrecht, Thomas
(86) International application number: PCT/JP2004/009504
(87) International publication number: WO 2005/001964

(57) **Abstract**

The present invention relates to a technique for producing a cathode film having a thin and even thickness and having stable electrical characteristics at a high productivity by an extrusion molding method.

That is, the present invention provides a compounding agent composition for a cathode film comprising an active material and an electrical conductivity-providing agent and having a repose angle of 35 degrees or less and a polyether polymer composition for a cathode film comprising at least a polyether polymer and the compounding agent composition for a cathode film described above. The object described above can be achieved by extrusion-molding them.

## Description

### TECHNICAL FIELD

The present invention relates to a compounding agent composition for a cathode film comprising an active material and an electrical conductivity-providing agent and a polyether polymer composition for a cathode film, specifically to a compounding agent composition for a cathode film and a polyether polymer composition for a cathode film which can produce a cathode film having a thin and even thickness and having stable electrical characteristics at a high productivity.

### BACKGROUND ART

A polyether polymer such as an ethylene oxide-propylene oxide copolymer shows a high ionic conductivity by adding an electrolytic salt compound such as a lithium salt compound which is soluble in the above polymer, and therefore it attracts attentions as a polymer material for a solid electrolyte (refer to Japanese Patent Application Laid-Open No. 83249/1986 and Japanese Patent Application Laid-Open No. 136407/1988).

A solid electrolyte-containing polymer material has to be a thin film in order to obtain a high output when used for an ionic conductive membrane for a cell. However, if the polyether polymer described above is controlled to such a composition and a molecular weight that a mechanical strength such as a tensile strength grows sufficiently large, the melt viscosity is elevated, and the fluidity is deteriorated. Accordingly, a method in which a solution prepared by dissolving a polyether polymer in an organic solvent is cast on a flat plate is employed as well in the patent documents described above as a production process for a high molecular solid electrolytic film. However, a casting method has a low productivity in producing a film and involves a problem on environmental safety, and therefore an extrusion molding method attracts attentions in recent years.

A solid electrolytic film using a polyether polymer is suited as a cathode film for a cell. In producing a cathode film, the large amounts of an active material which is a granular material and an electrical conductivity-providing agent in addition to an electrolytic salt compound have to be blended with a polyether polymer. In a process for producing a cathode film, these components have to be homogeneously dispersed in a polyether polymer, but the casting described above has involved the problem that a granular material having a large specific gravity settles down.

On the other hand, if a polyether polymer having a composition and a structure in which a fluidity is high to such an extent that a film having a thin and even thickness can be extruded is used in an extrusion molding method, the film is highly likely to be short of a mechanical strength to be broken in molding. Accordingly, a cathode film obtained by the extrusion molding method is hard to be uniformized in a thickness and is scattered usually in electrical characteristics such as an impedance to a large extent.

### DISCLOSURE OF THE INVENTION

An object of the present invention is to provide a technique for producing a cathode film having a thin and even thickness and having stable electrical characteristics at a high productivity by an extrusion molding method.

The present inventors have paid attentions to a granular active material which is blended in a large amount and an electrical conductivity-providing agent to repeat intensive investigations in order to achieve the object described above, and as a result thereof, they have found that if the active material and the electrical conductivity-providing agent are mixed in advance so that a specific filling state is shown, they are liable to be dispersed evenly in a polyether polymer and that use of such mixture makes it easy to obtain a cathode film having an evenly thin thickness by an extrusion molding method. The present invention has been completed based on these knowledges.

Thus, the following inventions 1 to 4 are provided according to the present invention.
1. A compounding agent composition for a cathode film comprising an active material and an electrical conductivity-providing agent and having a repose angle of 35 degrees or less.
2. A polyether polymer composition for a cathode film comprising at least a polyether polymer and the compounding agent composition for a cathode film as described in the above item 1.
3. A process for preparing the compounding agent composition for a cathode film as described in the above item 1 by mixing an active material and an electrical conductivity-providing agent by means of a Henschel mixer equipped with a stirring blade, wherein stirring is carried out at a peripheral velocity of 5 to 50 m/second at a tip of the stirring blade.
4. A production process for a cathode film, characterized by feeding an extruding machine with at least a polyether polymer and the compounding agent composition for a cathode film as described in the above item 1 to carry out extrusion-molding while blending both.

According to the present invention, a cathode film having a thin and even thickness and having stable electrical characteristics can be produced at a high productivity by an extrusion molding method.

### THE MOST PREFERRED EMBODIMENT TO CARRY OUT THE INVENTION

The compounding agent composition of the present invention for a cathode film which is blended with a polyether polymer in order to obtain a cathode film having a thin and even thickness and having stable electrical characteristics comprises an active material and an electrical conductivity-providing agent and has a repose angle of 35 degrees or less.

An active material usually used for a cathode film made of a polymer is used as the active material used for the compounding agent of the present invention for a cathode film. The examples of the above active material include lithium cobaltate (Li_{1.2}CoO₂, LiCoO₂ and the like), lithium manganese oxide (LiMn₂O₄, Li_{0.33}MnO and the like), lithium nickelate (LiNiO₂), lithium vanadate (LiV₂O₅), lithium iron phosphate (LiFePO₄), burned product of lithium iron phosphate and carbon, lithium phosphate vanadate (LiVOPO₄) and complex oxides thereof.

The active material has an average particle diameter of usually 0.1 to 30 µm, preferably 0.5 to 20 µm. If the average particle diameter of the active material is either too large or too small, it is likely that the active material is not evenly dispersed in the polyether polymer.

An electrical conductivity-providing agent usually used for a cathode film made of a polymer is used as the electrical conductivity-providing agent used for the compounding agent of the present invention for a cathode film. The examples of the above electrical conductivity-providing agent include acetylene black, Ketjen black and graphite.

The electrical conductivity-providing agent has an average particle diameter of usually 20 nm to 25 µm, preferably 50 nm to 10 µm. If the electrical conductivity-providing agent has a too small average particle diameter, dispersion is likely to be inferior. On the other hand, if it has a too large average particle diameter, irregularities are produced on the surface of the cathode film, and the film is likely to be easily broken.

A blending amount of the electrical conductivity-providing agent is usually 0.1 to 20 parts by weight, preferably 0.3 to 15 parts by weight per 100 parts by weight of the active material described above. If the blending amount of the electrical conductivity providing agent is too small, it is likely that the agent is less liable to be evenly dispersed in the polyether polymer when mixed with the active material. On the other hand, if it is too large, the film having an even thickness is not obtained, and the charge and discharge capacity is likely to be reduced in any cases.

In preparing the compounding agent composition for a cathode film, components such as an electrolytic salt compound, a plasticizer, a filler, a cross-linking agent and the like which shall be described later in addition to the active material and the electrical conductivity-providing agent may be blended together if necessary. In this case, the amounts of the components other than the active material and the electrical conductivity-providing agent are preferably 80 % or less, more preferably 50 % or less based on the weight of the compounding agent composition for a cathode film.

The compounding agent composition of the present invention for a cathode film comprising the active material and the electrical conductivity-providing agent has a repose angle of 35 degrees or less, preferably 33 degrees or less and more preferably 30 degrees or less. The repose angle of the above compounding agent composition is an index showing the fluidity when mixed with the active material and the electrical conductivity-providing agent each described above, and if this repose angle is too large, it is likely that the compounding agent composition is not evenly dispersed in the polyether polymer.

In this case, the repose angle is determined in the following manner. That is, 200 g of the compounding agent composition for a cathode film is fallen little by little at 23°C and a relative humidity of 50 % in the form of particles toward a central part on a stainless steel-made disc having a diameter of 80 mm which is placed downward by 7.5 cm from a tip of a nozzle of a funnel (diameter of an upper end part: 70 mm, depth: 60 mm, nozzle aperture: 5 mm, nozzle length: 35 mm), and the repose angle is an angle formed by a generating line of a conically piled matter and the bottom face of the disc at the point of time when the above composition falls from the end of the disc.

The active material and the electrical conductivity-providing agent are sufficiently mixed in order to allow the repose angle of the compounding agent composition for a cathode film comprising the active material and the electrical conductivity-providing agent to fall in the range described above. The mixing method shall not be restricted, and the active material and the electrical conductivity-providing agent are preferably mixed by means of a mixer which can carry out mixing at a high speed. A Henschel mixer is particularly preferred as the above mixer. The Henschel mixer is a mixer developed by Henschel Co., Ltd., Germany and has a structure in which two upper and lower stirring blades are installed at a bottom part of a closed mixing bath having a jacket and in which the blades are rotated at a high speed to carry out mixing. The temperature can optionally be controlled by frictional heat of powders themselves and heat transferred from the jacket. A volume of the closed vessel shall not be restricted and is usually 1 to 200 liter, preferably 3 to 100 liter.

Mixing by the Henschel mixer is carried out at a peripheral speed of usually 5 to 50 m/second, preferably 8 to 40 m/second at the tip of the blade for usually 0.5 to 20 minutes, preferably 1 to 15 minutes. A mixing starting temperature shall not be restricted and is 0 to 100°C, preferably 10 to 80°C.

The polyether polymer composition of the present invention for a cathode film comprises at least a polyether polymer and the compounding agent composition for a cathode film described above.

The polyether polymer used for the polyether polymer composition of the present invention for a cathode film shall not specifically be restricted as long as it comprises principally an oxyalkylene repetitive unit obtained by subjecting an oxirane monomer to ring opening polymerization. The oxirane monomer described above shall not specifically be restricted, but if an ethylene oxide monomer (a) is used as at least one component for the oxirane monomer used for the polymerization, a cathode film obtained by molding the polymer obtained from the above monomer is excellent in a mechanical strength, and therefore it is preferred. That is, in the polyether polymer used in the present invention, a mole ratio of the contents of an ethylene oxide monomer (a) unit and an oxirane monomer (b) unit which can be copolymerized with ethylene oxide is usually 70/30 to 99/1, preferably 80/20 to 99/1 and more preferably 85/15 to 99/1 in terms of [mole number of the monomer (a) unit]/[mole number of the monomer (b) unit]. If the content of the ethylene oxide monomer (a) unit is too small, it is likely that a crystallizing speed of the polyether polymer composition is reduced to make the cathode film in molding liable to be broken and that the cathode film is liable to stick on a cooling roll. On the other hand, if the content of the ethylene oxide monomer (a) unit is too large, it is likely that the smooth cathode film is less liable to be obtained.

The oxirane monomer (b) which can be copolymerized with ethylene oxide includes alkylene oxides having 3 to 20 carbon atoms, glycidyl ethers having 4 to 10 carbon atoms and oxides of aromatic vinyl compounds.

The oxirane monomer (b) which can be copolymerized with ethylene oxide may be used alone or in combination of two or more kinds thereof. In the present invention, the alkylene oxide having 3 to 20 carbon atoms and the glycidyl ether having 4 to 10 carbon atoms each described above are preferably used for at least one component thereof, and the alkylene oxide having 3 to 20 carbon atoms is more preferably used for at least one component thereof. The alkylene oxide having 3 to 20 carbon atoms is preferably propylene oxide.

A cross-linking oxirane monomer can be used for at least one component for the oxirane monomer (b) described above. The cross-linking oxirane monomer is a monomer obtained by introducing a cross-linking group into the oxirane monomer such as the alkylene oxide having 3 to 20 carbon atoms and the glycidyl ether having 4 to 10 carbon atoms each described above. When using the above cross-linking oxirane monomer, preferably used is the cross-linking oxirane monomer having a cross-linking group which can be cross-linked by light or peroxide such as a vinyl group, a hydroxyl group and an acid anhydride group. Among them, more preferably used is the cross-linking oxirane monomer having a vinyl group such as vinyl glycidyl ether and allyl glycidyl ether.

A polymerization catalyst used for subjecting the oxirane monomer (b) described above to ring opening polymerization shall not specifically be restricted, and capable of being used are polymerization catalysts which have so far conventionally been known as ring opening polymerization catalysts for oxirane compounds, such as a catalyst prepared by reacting organic aluminum with water and acetylacetone (Japanese Patent Publication No. 15797/1960), a catalyst prepared by reacting triisobuylaluminum with phosphoric acid and triethylamine (Japanese Patent Publication No. 27534/1971), a catalyst prepared by reacting triisobuylaluminum with an organic acid salt of diazabicycloundecene and phosphoric acid (Japanese Patent Publication No. 51171/1981), a catalyst comprising a partially hydrolyzed product of aluminum alkoxide and an organic zinc compound (Japanese Patent Publication No. 2945/1968), a catalyst comprising an organic zinc compound and polyhydric alcohol (Japanese Patent Publication No. 7751/1970) and a catalyst comprising dialkylzinc and water (Japanese Patent Publication No. 3394/1961).

A polymerization solvent shall not specifically be restricted as long as it does not deactivate the polymerization catalyst. Used are, for example, aromatic hydrocarbons such as benzene and toluene; saturated linear hydrocarbons such as n-pentane and n-hexane; and alicyclic hydrocarbons such as cyclopentane and cyclohexane.

Capable of being used as the polymerizing method is a solution polymerizing method in which an organic solvent dissolving the resulting polymer is used or a solvent slurry polymerizing method in which an organic solvent dissolving no resulting polymer is used, and preferred is the solvent slurry polymerizing method in which a solvent such as n-pentane, n-hexane and cyclopentane is used.

Among the solvent slurry polymerizing methods, a two stage polymerizing method in which a seed is polymerized in advance and in which polymerization for growing the particles of the seed is then carried out is preferred since an amount of a scale sticking onto an inner wall of a reactor is small.

The polyether polymer used in the present invention is a polymer having a weight average molecular weight (Mw) of usually 100,000 to 1,500,000, preferably 150,000 to 1,000,000 and more preferably 200,000 to 600,000 in terms of polystyrene which is measured by a gel permeation method using dimethylforamide as a solvent and a molecular weight distribution (Mw/Mn, wherein Mn is a number average molecular weight) of usually 1.5 to 13, preferably 1.6 to 12 and more preferably 1.7 to 11.

If the Mw is too large, a torque and a die pressure of the extrusion molding machine go up, and therefore the mold processing is likely to become difficult. On the other hand, if the Mw is too small, the resulting cathode film is short of a mechanical strength and liable to be broken, and the film is liable to stick, so that it is likely to be difficult to stably produce the thin cathode film.

If the value of the Mw/Mn is either too large or too small, the melt viscosity in molding the film is elevated, and the die pressure goes up in extrusion molding to make processing difficult or a surface flatness of the cathode film extrusion-molded and an evenness in the thickness thereof are damaged.

The electrolytic salt compound used for the polyether polymer composition for the-cathode film of the present invention shall not specifically be restricted as long as it is a compound which can transfer a cation and soluble in the polyether polymer used in the present invention. The specific examples of the above electrolytic salt compound include salts comprising anions such as halogen ions, perchloric acid ions, thiocyanic acid ions, trifluoromethanesulfonic acid ions (CF₃SO₃-), bis(trifluoromethanesulfonyl)imide ions [N(CF₃SO₂)₂-], bis(heptafluoropropylsulfonyl)imide ions [N(C₂F₅SO₂)₂-], trifluorosulfonimide ions, tetrafluoroboric acid ions (BF₄-), nitric acid ions, AsF₆-, PF₆-, stearylsulfonic acid ions and octylsulfonic acid ions and cations of metals such as lithium, sodium, potassium, rubidium and cesium. Among the above electrolytic salt compounds, lithium salt compounds having a lithium ion as a cation are preferred. Further, among the lithium salt compounds, LiBF₄, LiPF₆, LiCF₃SO₃, LiN(CF₃SO₂)₂ and LiN(C₂F₅SO₂)₂ are more preferred. The above electrolytic salt compounds may be used alone or in combination of two or more kinds thereof

A content of the electrolytic salt compound in the polyether polymer composition for the cathode film is usually 5 to 30 parts by weight, preferably 10 to 26 parts by weight and more preferably 15 to 22 parts by weight per 100 parts by weight of the polyether polymer. If the content of the electrolytic salt compound is too small, the cathode film is likely to be reduced in an ionic conductivity. On the other hand, if the content of the electrolytic salt compound is too large, the cathode film is likely to be unsatisfactory in a mechanical strength to be reduced in a molding processability.

The polyether polymer composition of the present invention for a cathode film comprises the compounding agent for a cathode film comprising the active material and the electrical conductivity-providing agent each described above and having a repose angle of 35 degrees or less in an amount of usually 10 to 1,000 parts by weight, preferably 30 to 800 parts by weight, more preferably 50 to 600 parts by weight per 100 parts by weight of the polyether polymer based on the active material. If the content of the above compounding agent composition is too small, the cathode is unsatisfactory in an electrode performance in a certain case. On the other hand, if it is too large, dispersion is uneven to make a thickness of the film uneven, and therefore molding is likely to be difficult.

The polyether polymer composition for the cathode film of the present invention may be blended, if necessary, with additives such as a plasticizer, a cross-linking agent, an antioxidant, a light stabilizer, a lubricant, a flame retardant, an anti-mold agent, an anti-static agent, a colorant, a reinforcing agent and a filler.

In respect to a method for preparing the polyether polymer composition of the present invention for a cathode film, the polyether polymer, the compounding agent composition of the present invention, the electrolytic salt compound and the optional components described above which are blended if necessary may be mixed in advance by means of a mixing apparatus. Further, in molding the cathode film, at least the polyether polymer and the compounding agent composition of the present invention can be fed directly into an extrusion-molding machine to carry out extrusion molding while mixing both. This makes it possible to obtain the cathode film in which the compounding agent composition of the present invention is evenly dispersed. Further, melting, kneading and molding of the polyether polymer can effectively be carried out at the same time, and therefore it is preferred.

A mixing roll, a Banbury mixer, a kneader and a Brabender are given as the examples of the mixing apparatus in the former method. The polymer composition can be pelletized by melting and kneading by means of an extruding machine.

The production process of the present invention for a cathode film is characterized by feeding an extruding machine with at least the polyether polymer and the compounding agent composition for a cathode film described above to carry out extrusion-molding while blending both.

The kind of an extruding machine for molding the cathode film shall not be restricted. A two shaft extruding machine is preferred, and a two shaft extruding machine having a second introducing port in the middle of a barrel between a material-introducing port and a die is more preferred. The second introducing port can be used when feeding a component for reducing heat history and shearing.

A ratio L/D of a length of a barrel to an inner diameter thereof in the extruding machine is usually 10 to 50. A film die such as a straight manifold die, a fish tail die and a coat hanger die is used as the die.

A temperature of the kneading part for stably producing the thin film using the polyether polymer composition of the present invention is usually 80 to 200°C, preferably 100 to 190°C and more preferably 110 to 180°C. If the temperature of the kneading part is too low, the viscosity is likely to go up to make it difficult to smoothly extrude the thin film. On the other hand, if the temperature of the kneading part is too high, the polymer causes heat decomposition, and the film is likely to be reduced in a strength.

Further, the polyether polymer composition preferably contains a suitable amount of moisture in order to allow the composition to flow smoothly in melting and kneading. The moisture content is usually 500 to 5,000 ppm, preferably 800 to 4,000 ppm and more preferably 1,000 to 3,000 ppm based on the weight of the polyether polymer.

The cathode film extruded from the die of the extruding machine is rolled round a receiving roll via a cooling roll. A controlling roll is disposed before the receiving roll to detect a thickness and a tension of the film by means of the respective detecting means, and the results thereof are preferably fed back to the extruding machine and the controlling roll.

The surface of the film extruded from the die can be finished to a smoother state by making the surface of the cooling roll specular.

The cathode film obtained by the production process of the present invention has a thickness of usually 10 to 150 µm, preferably 20 to 100 µm. If the thickness is too small, the film is likely to be inferior in handling. On the other hand, if the thickness is too large, the film is likely to be reduced in an adhesive property and a folding property thereof with a laminate film brought into contact with the above film.

According to the production process described above, the active material and the electrical conductivity-providing agent are evenly dispersed in the polyether polymer, and therefore the cathode film having a thin and even thickness can continuously be received at a high speed without cutting. This makes it possible to produce the film at a very high productivity as compared with a conventional solution casting method. Further, the present process does not have a volatilizing step as is the case with the casting method, and therefore it is safe in terms of environmental protection.

### EXAMPLES

The present invention shall more specifically be explained below with reference to reference examples, examples and comparative examples, but the present invention shall by no means be restricted by them. ┌Parts┘ and ┌%┘ are based on weight unless otherwise described. The test and the evaluations were carried out by the following methods.

### (1) Polymer composition :

The composition of the polyether polymer was measured by means of 500 MHz ¹H-NMR and ¹³C-NMR.

### (2) Weight average molecular weight (Mw) and molecular weight distribution (Mw/Mn) :

Measured on the following conditions by means of gel permeation chromatography (GPC):
Apparatus: GPC measuring apparatus manufactured by Toso Co., Ltd.
Column: G7000HHR + GMHHR-H manufactured by Toso Co., Ltd.
Solvent: dimethylformamide (lithium bromide 5 mmol/L)
Flow velocity: 1 ml/min, column temperature: 40°C
Molecular weight standard substance: standard polystyrene manufactured by Polymer Laboratory Co., Ltd.

### (3) Repose angle of the compounding agent composition for a cathode film

A glass-made funnel (diameter of an upper end part: 70 mm, depth: 60 mm, nozzle aperture: 5 mm, nozzle length: 35 mm) was put so that an upper end thereof was positioned downward by 10 mm from a JIS standard sieve having an aperture of 1 mm which was horizontally disposed in a shaker. On the other hand, a stainless steel-made disc having a diameter of 80 mm and a thickness of 3.5 mm was horizontally put on a pedestal put on a desk so that a center thereof was positioned just under the center of the funnel, and a distance between the nozzle tip of the funnel and the surface of the stainless steel-made disc was maintained at 7.5 mm. Put on the sieve was 200 g of the compounding agent composition for a cathode film left standing at 23°C and a relative humidity of 50 % for a whole day and night, and the shaker was operated at a horizontal shaking width of 0.8 mm and a reciprocating frequency of 3,000 VPM (reciprocating frequency per minute) to feed the above composition on the disc from the lower part of the funnel. A conical piled matter was formed on the disc, and the above composition was stopped feeding at the point of time when the above composition fell from the end of the disc. Then, the piled matter was irradiated with a laser beam parallel to a horizontal direction, and two angles formed by the generating lines of an image of the piled matter projected on a back screen and the base were measured to determine an average value thereof, which was set to a repose angle.

### (4) Limit receiving speed :

A receiving speed of the film was set to 4 m/minute at the beginning as the indicator of a thin film moldability of the film to start extrusion of the film. The extruding machine was operated for 2 minutes and stabilized, and then the receiving speed was raised by 1 m/minute. After that, it was continued to carry out the operation stably for 2 minutes at the respective speeds and then raise the receiving speed by 1 m/minute in the same manner, and the receiving speed immediately before the film was cut was determined to evaluate it as the limit receiving speed. The unit is m/minute.

### (5) Average film thickness :

The sample of the cathode film at the limit receiving speed in (4) described above was measured for thicknesses in 6 points at an interval of 20 cm in a longitudinal direction by means of a digital film thickness meter, and an average value thereof was set as the average film thickness. The unit is µm.

### (6) Scattering degree of film thickness

Shown by a value obtained by dividing a difference between a maximum value and a minimum value of the measured values in the 6 points per cathode film sample in (6) described above with the average value of the measured values in the 6 points. The smaller the numerical value, the smaller the scattering.

### (7) Average impedance

A polypropylene-made gasket (outer diameter 20 mm, inner diameter 16 mm, height 3 mm) was disposed at a joining plane with a cap of a stainless steel-made vessel (diameter 20 mm, height 3 mm). The cathode film cut in the form of a circle having a diameter of 15 mm was set to the bottom of the above vessel, and a stainless steel-made disc (diameter 15 mm, thickness 1 mm) and then a spring (outer diameter 15 mm, inner diameter 10.6 mm, height 1.7 mm) were superposed thereon. Then, a stainless steel-made cap was covered thereon and fastened to prepare a coin type cell having a thickness of about 3.2 mm. The six test pieces per cathode film in (6) described above were used respectively to prepare six pieces of the coin type cells, and Z cos θ in an axis of ordinate was measured by means of an electrochemical measuring system (Impedance Analyzer 1260 type, manufactured by Solatron Co., Ltd.) to determine an average thereof.

### (8) Scattering degree of impedance :

Shown by a value obtained by dividing a difference between a maximum value and a minimum value in the 6 points in (7) described above with the average value. The smaller the numerical value, the smaller the scattering.

### (9) Cell capacity :

The cathode film, then a solid electrolyte-containing cross-linked polymer film (refer to the following remark) comprising a polyether polymer B and lithium trifluoromethanesulfonylimide, a stainless steel-made disc and a spring were superposed in order in the same manner as in (7) described above on the bottom of a stainless steel-made vessel in which a polypropylene-made gasket was disposed, and a stainless steel-made cap was covered thereon and fastened to prepare a coin type cell having a thickness of about 3.2 mm. A capacity of the cell was determined by measuring an initial capacity of the cell at 60°C and a charge and discharge rate set to 0.2 by a constant current method after applying twice prescribed charge and discharge voltage (a voltage difference of 1.5 V between charge and discharge). Determined was an average value of the initial cell capacities measured for the six coin type cells prepared using respectively the six test pieces per cathode film.
The unit is mAh/g-active material.
(Remark): 100 parts of the polyether polymer B described in Reference Example 2, 32 parts of lithium trifluoromethanesulfonylimide and 2 parts of benzyl methyl ketal were dissolved in tetrahydrofuran, and the solution thus obtained was applied on a fluororesin plate and dried to obtain a film having a thickness of about 100µm. The film was irradiated with a UV ray to obtain a solid electrolyte-containing cross-linked polymer film.

### Reference Example 1 (production of polyether polymer A

An autoclave equipped with a jacket and a stirrer was dried and substituted with nitrogen, and then it was charged with 65.1 parts of triisobutylaluminum, 217.9 parts of toluene and 121.6 parts of diethyl ether. The inside temperature was set to 30°C, and 11.26 parts of phosphoric acid was added thereto at a constant rate in 10 minutes while stirring. Triethylamine 5 parts was added thereto, and they were ripened and reacted at 60°C for 2 hours to obtain a catalyst solution.

The autoclave was substituted with nitrogen and charged with 1514 parts of n-hexane and 63.3 parts of the catalyst solution described above. The inside temperature was set to 30°C, and 7.4 parts of ethylene oxide was added thereto while stirring and reacted. Then, 14.7 parts of an equivalent weight mixed monomer of ethylene oxide and propylene oxide was added thereto and reacted to form a seed.

The inside temperature was set to 60°C, and a mixed solution comprising 439.6 parts (92 mole %) of ethylene oxide, 50.4 parts (8 mole %) of propylene oxide and 427.4 parts of n-hexane was continuously added thereto in 5 hours at an equivalent rate. After finishing addition, the reaction was continued for 2 hours. The polymerization reaction rate was 98 %. Added to the resulting slurry was 42.4 parts of a 5 % toluene solution of 4,4'-thiobis(6-tert-butyl-3-methylphenol) as an antioxidant. The polymer crumb was filtered and dried by vacuum at 40°C to obtain a powder-like polyether polymer A.

The polyether polymer A had a composition of 91.5 mole % of an ethylene oxide (EO) unit and 8.5 mole % of a propylene oxide (PO) unit. Further, this polymer had Mw of 272,000 and Mw/Mn of 4.5.

### Reference Example 2 (production of polyether polymer B

Ethylene oxide, propylene oxide and allyl glycidyl ether were used to carry out seed polymerization in n-hexane by a publicly known method to obtain a powder-like polyether polymer B having 93.5 mole % of an EO unit, 2.8 mole % of a PO unit and 3.7 mole % of an allyl glycidyl ether (AGE) unit and having Mw of 350,000 and Mw/Mn of 10.2.

### Example 1

A Henschel mixer (FM10BF, content volume: 9 liter, manufactured by Mitsui Miike Kako Co., Ltd.) was charged with 100 parts of lithium cobaltate (LiCoO₂, Cell Seed C-5H, average particle diameter: 5 µm, manufactured by Nippon Chemical Ind. Co., Ltd.) which was an active material and 5 parts of Ketjen black (Ketjen Black EC, average particle diameter: 39.5 nm, manufactured by Lion Co., Ltd.) which was an electrical conductivity-providing agent to start stirring at a stirring blade revolution number of 1500 rpm and a stirring blade tip peripheral speed of 14.4 m/second. Stirring was continued at a set temperature of 30°C for 3 minutes to obtain a compounding agent composition a for a cathode film a. The above composition had a repose angle of 19 degrees.

An introducing part of a 25 mm diameter two shaft extruding machine (screw revolution number: 200 RPM, L/D = 40) was fed with 30 parts of the polyether polymer A, 100 parts of the compounding agent composition a for a cathode film and 8 parts of lithium trifluoromethanesulfonylimide [LiN(CF₃SO₂)₂, manufactured by Kishida Chemical Co., Ltd.] which was an electrolytic salt compound to prepare a polyether polymer composition A, and it was extruded through a coat hanger film die. The temperature conditions of the extruding machine were 30°C in the introducing part, 50 to 100°C in the melting part, 180°C in the kneading part, 140°C in the head and 140°C in the die. The film (width: 200 mm) extruded was brought into contact with a cooling roll (diameter: 200 mm) and then rolled round a receiving roll (diameter: 200 mm).

Shown in Table 1 are results obtained by testing and evaluating a repose angle of the compounding agent composition for a cathode film, a limit receiving speed, an average film thickness and a scattering degree in a film thickness of the resulting cathode film and an average impedance, a scattering degree in the impedance and an initial cell capacity of the coin type cell prepared using the above cathode film.

### Examples 2 and 3 and Comparative Example 1

The same procedure as in Example 1 was repeated, except that in Example 1, the active material and the operating conditions of the Henschel mixer were changed as shown in Table 1. Results obtained by carrying out the tests and the evaluations in the same manners as in Example 1 are shown in Table 1. In Example 3, lithium manganese oxide (Li_{0.33}MnO₂, average particle diameter: 0.5 µm, manufactured by Chuo Denki Kogyo Co., Ltd.) was substituted for lithium cobaltate.

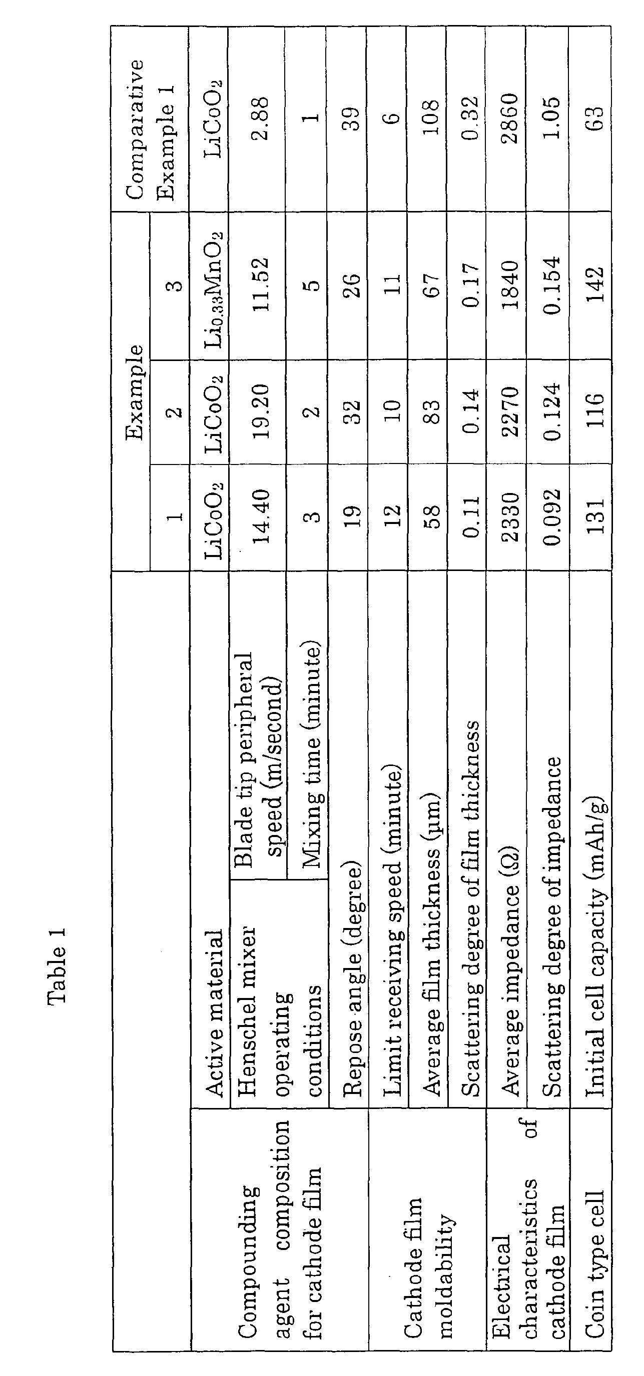

As apparent from the results shown in Table 1, use of the compounding agent composition for a cathode film having a repose angle of 35 degrees or less made it possible to produce the cathode film at a high receiving speed and a high productivity, and the film thus obtained had a thin and even thickness. A coin type cell prepared by using the above film for a cathode stably showed a low impedance and a high cell capacity (Examples 1 to 3).

On the other hand, use of the compounding agent composition for a cathode film in which a repose angle exceeded 35 degrees due to insufficient mixing by the Henschel mixer decreased a limit receiving speed of the cathode film and reduced the productivity. Further, the resulting film had an uneven thickness, and the above cathode film had a high impedance and showed large scattering in the impedance. The initial cell capacity showed a low value (Comparative Example 1).

## Claims

1. A compounding agent composition for a cathode film comprising an active material and an electrical conductivity-providing agent and having a repose angle of 35 degrees or less.

2. A polyether polymer composition for a cathode film comprising at least a polyether polymer and the compounding agent composition for a cathode film as described in claim 1.

3. A process for producing the compounding agent composition for a cathode film as described in claim 1 by mixing an active material and an electrical conductivity-providing agent by a Henschel mixer equipped with a stirring blade, wherein stirring is carried out at a peripheral velocity of 5 to 50 m/second at a tip of the stirring blade.

4. A production process for a cathode film, **characterized by** feeding an extruding machine with at least a polyether polymer and the compounding agent composition for a cathode film as described in claim 1 to carry out extrusion-molding while blending both.
